# EUROPEAN PATENT APPLICATION

(11) **EP 1 834 751 A1**
(43) Date of publication of application: **19.09.2007**
(21) Application number: 06708820.3
(22) Date of filing: 02.01.2006
(51) Int. Cl.: B29C 45/33

(54) **APPARATUS FOR THE INJECTION MOULDING OF PREFORMS**

(30) Priority: 04.01.2005 EP 05380003
(71) Applicant: Industrial de Moldes Y Matrices SA, 08110 Montcada I Reixac (Barcelona) (ES)
(72) Inventor: ATANCE ORDEN, A., Polígon Industrial La Ferreria, 08110 Montcada I Reixac (Barcelona) (ES)
(74) Representative: Gislon, Gabriele
(86) International application number: PCT/ES2006/000001
(87) International publication number: WO 2006/072646

(57) **Abstract**

The invention relates to an apparatus for injection molding of preforms which comprises a injection hot runner (1); a cavity block (2) containing at least one injection cavity (10) connected to said hot runner (1); injection neck splits (9a, 9b) assembled on a neck-bearing plate (3); at least one core (7) associated to a baseplate (6) actuated to move in a first direction (D1) between a closed position, in which said core (7) is introduced in said injection cavity (10), and an open position, in which the core (7) is removed from said injection cavity (10). The core (7) has associated thereto an ejecting element (8) configured to define a part of the mold of the preform and connected to an ejecting plate (4) actuated to move the ejecting element (8) back and forth in said first direction (D1) to eject the preform (P) from the core (7).

## Description

### Technical Field

The present invention relates to an apparatus for injection molding of preforms, comprising a preform ejecting element which has a surface that contributes to form the mold cavity of the preform. The apparatus is adapted to carry out cycles for injecting-cooling-ejecting the preforms, and according to its embodiment, it is useful for both cycles in which the injection and cooling are carried out in the injection cavity itself and cycles in which the injection and cooling are carried out separately in an injection cavity and a cooling cavity, respectively.

### State of the Prior Art

Apparatuses for injection molding of preforms are well known, such preforms being test tube-shaped hollow bodies made of plastic material, for example polyethylene terephthalate (PET), provided with a neck, optionally with an outer screw thread and an annular flange, and a mouth. The performs, also known in the art as parisons, are intended for the subsequent manufacture of plastic bottles by blowing the test tube-shaped body, in which process the neck and the mouth are unaltered. A simple type apparatus basically comprises a fixed part with a injection hot runner, with a cavity block containing at least one injection cavity connected to said hot runner, where said injection cavity defines a first part of a mold of said preform. A neck-bearing plate is associated to the cavity block, on which plate there are assembled injection neck splits adapted to close next to the opening of said injection cavity, defining a second part of said mold of the preform, and to open. In a moving part, the apparatus comprises a baseplate having associated thereto at least a core configured to define a third part of the mold of the preform. This baseplate is actuated to move in a first direction between a closed position, in which said core is introduced in said injection cavity, and an open position, in which the core is removed from said injection cavity. During the step from the closed position to the open position, the mentioned injection neck splits cooperate in the removal of the preform. In these simple apparatuses, the injection and the cooling of the preform are carried out in the injection cavity itself.

For the purpose of reducing the duration of the cycle for injecting-cooling-ejecting the preforms, apparatuses are currently used in which the injection and cooling are carried out separately in an injection cavity and a cooling cavity respectively. This type of apparatuses uses a mold with several cavities fixed to a vertical or horizontal injection press and an external device for cooling the injected preforms. One such preform cooling device is necessary when it is wanted to reduce the production cycle time, because the preforms need a long cooling time due to their thick walls, and a cooling which was exclusively carried out in the injection mold would provide an excessively long cooling time. Therefore, part of the total cooling time is carried out in the mold and another part (generally longer) is carried out externally in a device that is especially designed for that purpose.

In practice, there are many different designs of these cooling devices, both horizontal and vertical actuation devices, always seeking the manner of coupling to the injection press. Patent document IT-A-1317242, belonging to Cantoni, describes a process for manufacturing preforms using an injection mold with several cavities for the injection and two cooling plates, each plate with the same number of cooling cavities as that of injection. The cooling plates are located one on either side of the injection mold and two sets of cores are assembled on a moving support moving alternately between two positions. In a first position, one of the sets of cores is connected to the injection cavities whereas the other set of cores is connected to the cooling cavities of a first plate, whereas in a second position, the set of cores which was connected to the injection cavities is now connected to the cooling cavities of the second plate and the set of cores which was connected to the cooling cavities of the first plate is now connected to the injection cavities.

Patent documents EP-A-0673748, US-A-4201535, and US-A-4472131 describe variants of apparatuses for the injection molding of preforms which alternately carry out injection and cooling operations in separate cavities. In the mentioned patent document US-A-4472131, the molds for the neck portions of the preforms are formed by two halves which are opened by mechanical means to allow ejecting the preform. A rod is arranged axially inside the core, which rod is moved by a cam device to open a control valve in a compressed air passageway. The end of the rod, when moved, projects from the end of the core so as to initially push the preform, and a compressed air flow leaving through the end of the core finishes the ejection of the preform. This ejecting device is complex and expensive.

Another known preform ejecting device comprises a double set of neck splits, one for the injection and the other one for the ejection. However, this device is not cost-effective because the neck splits are highly complex elements with a high constructive cost.

An objective of the present invention is to contribute to palliating the previous drawbacks by means of an apparatus for injection molding of preforms provided with a preform ejecting system which is simple and effective, and constructed by means of elements that are easy to machine and have a low constructive cost.

### Disclosure of the Invention

The present invention contributes to reaching the previous and other objectives by providing an apparatus for injection molding of preforms, of the type comprising, according to a basic embodiment, a injection hot runner; a cavity block containing at least one injection cavity connected to said hot runner, said injection cavity defining a first part of a mold of said preform; a neck-bearing plate on which there are assembled injection neck splits adapted to close next to the opening of said injection cavity defining a second part of said mold of the preform, and to open; a baseplate which has associated thereto at least one core configured to define a third part of the mold of the preform, said baseplate being actuated to move in a first direction between a closed position, in which said core is introduced in said injection cavity, and an open position, in which the core is removed from said injection cavity. The apparatus of the present invention is characterized in that it further comprises an ejecting element associated to said core and configured to define a fourth a part of the mold of the preform, said ejecting element being connected to an ejecting plate actuated to move the ejecting element in said first direction for the purpose of ejecting the preform from the core.

The present invention provides other, more complex embodiments, in which the injection and cooling operations are respectively carried out in separate injection and cooling cavities, with a double set of cores provided with alternate movements. A common feature of all the embodiments of the present invention is that the mold cavity, and therefore the geometry of the preform, is defined by four basic elements of the apparatus, namely: the injection cavity, forming the outer part of the body of the preform; the injection neck splits forming the outer part of the neck of the preform; the core, forming the inner part of the preform; and the ejecting element forming the upper front part of the mouth of the preform. It must be indicated that all the preform molds of the state of the art form the mold cavity by means of only three elements of the apparatus, namely: the injection cavity; the neck splits; and the core.

Therefore, the novel feature of the apparatus of the present invention is the ejecting system that includes the mentioned ejecting element, which fulfills two purposes. The first purpose is to facilitate the ejection and fall of the preform, especially in preforms which are difficult to eject with the devices of the state of the art because they have a complicate profile in the area of the neck. The second purpose is to provide a significant reduction of manufacturing costs, because the ejecting elements in the form of a sleeve of the present invention are parts that are easy to machine and have a low constructive cost, the incorporation of which parts prevents the need to have a double set of neck splits like in some current systems, with the subsequent saving, since the neck splits are one of the most complex elements with a high constructive cost which form this type of apparatus for injection molding of preforms.

### Brief Description of the Drawings

The previous and other advantages and features will be more fully understood from the following detailed description of several embodiments with reference to the attached drawings, in which:
Figure 1 shows a schematic cross-sectional view of an apparatus for injection molding of preforms according to a first embodiment of the present invention, with the baseplate in a closed position;
Figure 2 shows a schematic cross-sectional view of the apparatus of Figure 1, with the baseplate in an open position;
Figure 3 shows a schematic cross-sectional view of the apparatus of Figure 1, with the baseplate in an open position and the ejecting element carrying out a maneuver for ejecting the preform;
Figure 4 shows a schematic cross-sectional view of an apparatus for injection molding of preforms according to a second embodiment of the present invention, with the baseplate in a closed position;
Figures 5 to 10 show schematic cross-sectional views of the apparatus of Figure 4 in different phases of a cycle for molding, cooling and ejecting the preform;
Figures 11 and 12 shows schematic plan views of several components associated to a fixed part and a moving part, respectively, of an apparatus according to a variant of the second embodiment shown in Figures 4 to 10;
Figure 13 shows a schematic plan view of several components associated to a fixed part and a moving part, respectively, of an apparatus for injection molding of preforms according to another variant of the second embodiment;
Figure 14 shows a partial enlarged cross-sectional view, taken along line XIV of Figure 13;
Figures 15A and 15B show partial enlarged cross-sectional views, taken along line XV of Figure 13, in two different phases of a cycle for molding, cooling and ejecting preforms;
Figure 16 shows a schematic cross-sectional view of the apparatus of Figure 13 in a phase of said cycle; and
Figures 17 and 18 shows schematic plan views of several components associated to a fixed part and a moving part, respectively, of an apparatus for injection molding of preforms according to a third embodiment of the present invention.

### Detailed Description of Exemplary Embodiments

The same reference numbers have been used throughout the following description to designate similar elements in the different embodiments.

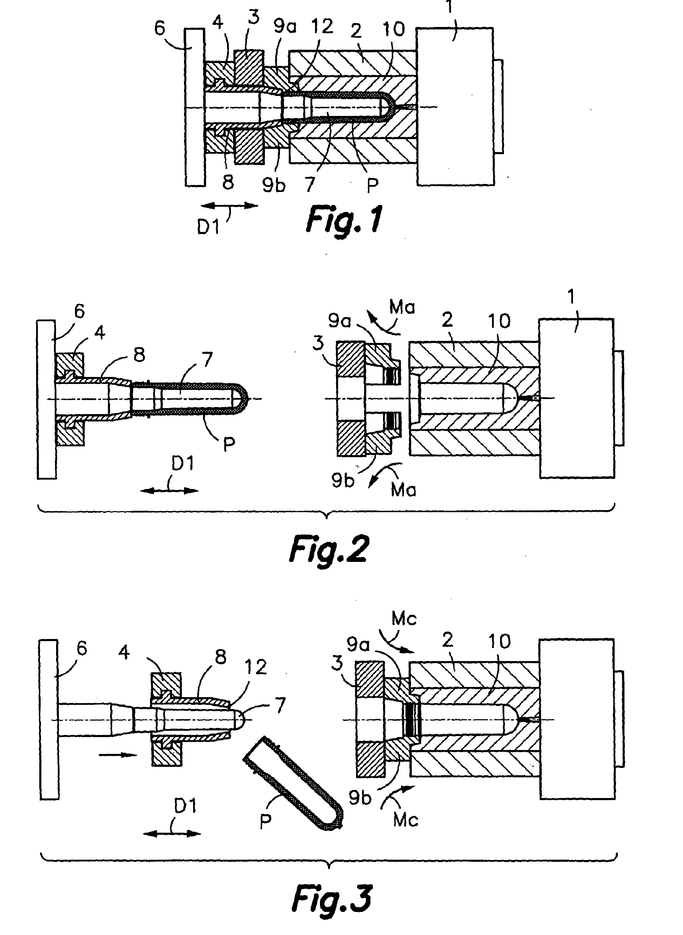

With reference first to Figures 1 to 3, a first embodiment of the apparatus of the invention is described which corresponds to its simplest expression and is adapted to produce preforms P comprising, according to the example shown, a test tube-shaped body with a neck and a mouth.

The apparatus of this first embodiment comprises an injection hot runner 1, to which there is joined a cavity block 2 containing an injection cavity 10 connected to said hot runner 1. The mentioned injection cavity 10 defines a first part of a mold of the preform P corresponding to an outer surface of said test tube-shaped body. The mentioned hot runner 1 and the cavity block 2 form a fixed part 20 joined to a fixed tray of an injecting machine (not shown). This fixed part 20 of the apparatus has associated thereto a neck-bearing plate 3 on which injection neck splits 9a, 9b are assembled. The mentioned neck-bearing plate 3 is provided with a small movement to move closer to or away from the cavity block 2 and said injection neck splits 9a, 9b are provided with movements to move closer to or away from one another. With these combined movements, the injection neck splits 9a, 9b are adapted to adopt a closed position next to the opening of said injection cavity 10 (Figure 1) defining a second part of said mold of the preform P during the injection operation, and to later open (Figure 2), carrying out a combined opening movement symbolized by arrows Ma, to allow the removal of the molded preform P. The mentioned second part of the mold of the preform P, defined by said injection neck splits 9a, 9b, corresponds to an outer surface of said neck, and usually includes a configuration for forming a screw thread and/or an annular rib in said outer surface of the neck of the preform P.

The apparatus further comprises a moving part 30 fixed to a moving tray of said injecting machine. This moving part 30 is formed by a baseplate 6 to which there is joined to a core 7 configured to define a third part of the mold of the preform P corresponding to an inner surface of both the test tube-shaped body and the neck of the preform. The mentioned baseplate 6 is assembled in a moving, guided manner, and is actuated to move in a first direction D1 between a closed position, shown in Figure 1, in which said core 7 is introduced in the injection cavity 10, and an open position, shown in Figure 2, in which the core 7 is removed from said injection cavity 10. In this first embodiment, the apparatus is adapted to carry out an injection operation for injecting a molten plastic material (for example, polyethylene terephthalate (PET)) to mold the preform P inside the mold defined when the baseplate 6 is in the closed position and a subsequent cooling operation for cooling the preform P in the same injection cavity 10 before the baseplate 6 goes to its open position. To that end, the cavity block is generally provided with a circuit for a cooling fluid (not shown). When the preform P is cooled, it contracts slightly, such that the preform P remains secured to the core 7 when the baseplate 6 is located in the open position (Figure 2).

The moving part 30 of the apparatus further comprises an ejecting element 8 associated to said core 7, which forms the characteristic element of the apparatus according to the present invention. The mentioned ejecting element 8 has the form of a sleeve arranged around the core 7 and comprises an end annular surface 12 that defines when the baseplate 6 is in the closed position (Figure 1), a fourth part of the mold of the preform P substantially corresponding to an end annular part around said mouth of the preform P. The ejecting element 8 is connected to an ejecting plate 4 guided and actuated to move the ejecting element 8 along the core 7 in a back and forth movement which is carried out while the baseplate 6 is in said open position (Figure 3) for the purpose of ejecting the preform P from the core 7. While the ejection operation is carried out, the injection neck splits 9a, 9b again close, carrying out a combined closing movement symbolized by arrows Mc in Figure 3, and when the ejecting element 8 has returned to its initial position, the baseplate 6 is ready to again be located in the closed position, with the core 7 again introduced in the injection cavity 10 (Figure 1), for the purpose of starting a new cycle for injecting-cooling-ejecting a preform P.

According to a variant (not shown) of this first embodiment, the cavity block 2 includes any operating number of injection cavities 10 and the baseplate 6 has an identical number of cores 7, the operation cycle being carried out jointly for all of them in a manner similar to that described above in relation to Figures 1 to 3 for a single injection cavity 10 and a single core 7. In this variant, each core 7 has associated thereto its own ejecting element 8, and all the ejecting elements 8 are joined to a single common ejecting plate 4.

It must be indicated that, unlike the apparatuses of the state of the art, in which the mold cavity is defined by only three basic elements, a relevant feature of the present invention, and common for all the embodiments, is that the mold cavity, and therefore the geometry of the preform P is defined by four basic elements. As described above, these four basic elements are: the injection cavity 10, forming the outer part of the body of the preform P; the core 7, forming the inner part of the preform P; the injection neck splits 9a, 9b, forming the outer part of the neck of the preform P; and the ejecting element 8, forming the upper front part of the mouth of the preform P. The novelty is the ejecting element 8, which is used after the injection to eject the preform P from the core 7.

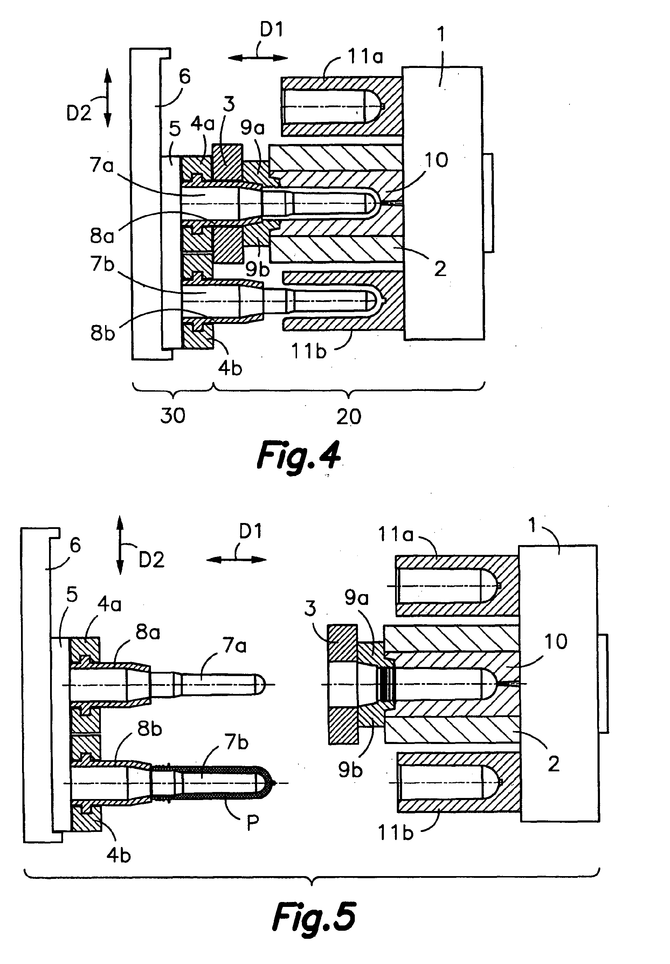

With reference now to Figures 4 to 10, a second embodiment of the apparatus of the invention is described, in which the cooling operation is completed in a cooling cavity 11a, 11b different from the injection cavity 10 for the purpose of reducing the duration of the cycle for injecting-cooling-ejecting the preform P. As in the previous embodiment, the preforms P produced comprise a test tube-shaped body, with a neck and a mouth.

According to this second embodiment, and in a manner similar to that described above in relation to the first embodiment, the apparatus comprises a fixed part 20 joined to a fixed tray of an injecting machine (not shown) and a moving part 30 fixed to a moving tray of said machine (Figure 4). The fixed part 20 is formed by a injection hot runner 1 to which there is joined a cavity block 2 containing at least one injection cavity 10 defining a first part of a mold cavity in which the preform P will be formed during the injection operation. The cavity block 2 has associated thereto a neck-bearing plate 3 supporting two injection neck splits 9a and 9b adapted to close next to the opening of the injection cavity 10 to form a second part of the preform, and to open.

However, in this second embodiment, the injection cavity 10 is placed between two cooling cavities 11a and 11b adapted to cool the outside of the preform P by means of a circuit for a cooling fluid (not shown) in a cooling operation after the injection operation. The moving part 30 comprises a baseplate 6 guided and actuated to move in a first direction D1 between a closed position, shown in Figures 4, 6 and 10, and an open position, shown in Figures 5, 7, 8 and 9. A core-carrying plate 5 to which two cores 7a, 7b are fixed is assembled on the baseplate 6. The mentioned core-carrying plate 5 is adapted and actuated to be moved on the baseplate 6 in a second direction D2 transverse to the first direction D1. During the operation of the apparatus, a control device controls in combination movements of the baseplate 6 in the first direction D1 and of the core-carrying plate 5 in the second direction D2 to alternately introduce the cores 7a, 7b in the injection cavity 10 and in one of the two cooling cavities 11a, 11b, as will be described in more detail below. Each core 7a, 7b has associated thereto a respective ejecting element 8a, 8b similar to the ejecting element 8 described above in relation to the first embodiment, and each ejecting element 8a, 8b is connected to a respective ejecting plate 4a, 4b independently actuated to carry out a back and forth movement of the ejecting element 8a, 8b along its respective core 7a, 7b whereas the baseplate 6 is in said open position for the purpose of ejecting the preform P.

It must be observed that in this second embodiment, as in the first one, the mold cavity is formed by four basic elements, which in this case are: injection cavity 10; injection neck splits 9a and 9b; and, alternately, either core 7a, 7b and the ejecting element 8a, 8b associated thereto.

The operation of the apparatus according to the second embodiment is as follows. The cycle starts, for example, with the apparatus in the position shown in Figure 5, where the baseplate 6 is in the open position and the core-carrying plate 5 is in one of two possible positions, called "lower position" herein in relation to the views shown in the figures. In this position, a first core 7a of the two cores 7a, 7b is bare and opposite to the injection cavity 10, next to which the two injection neck splits 9a, 9b are closed, whereas the second core 7b is opposite to one of the cooling cavities, called "lower cooling cavity 11b" herein in relation to the views shown in the figures. A preform P which is still not sufficiently cooled and comes from a previous injection operation is located on this second core 7b.

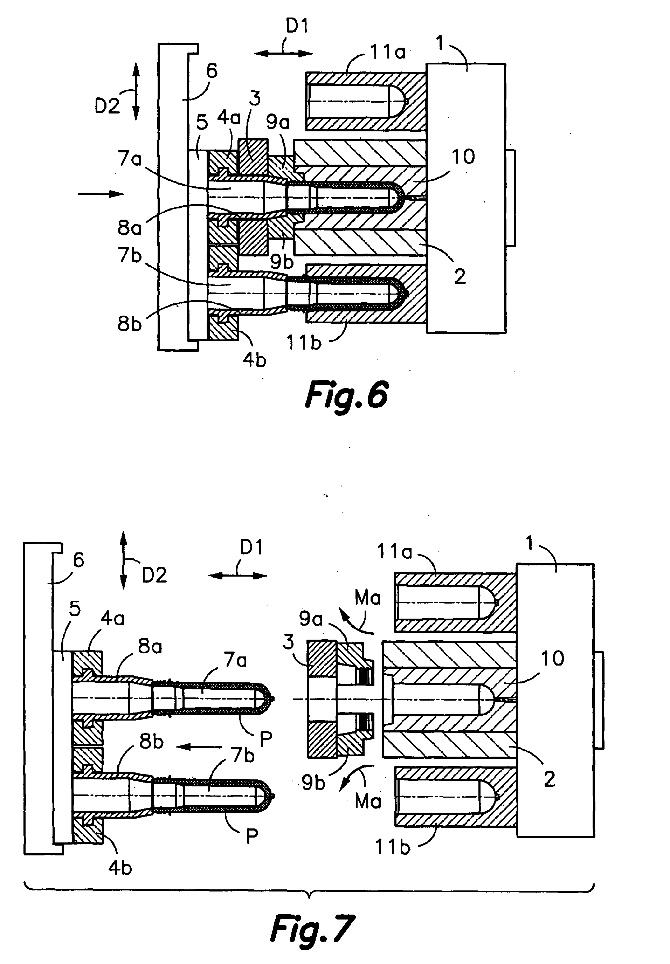

The baseplate 6 is then moved to its closed position shown in Figure 6 without changing the position of the core-carrying plate 5, where the first core 7a is introduced in the injection cavity 10 such that the cavity of the mold of the preform P is completed by the joint cooperation of several surfaces of the injection cavity 10, of the injection neck splits 9a, 9b, of the first core 7a and of a first ejecting element 8a of the two ejecting elements 8a, 8b, which ejecting element is associated with the first core 7a. When this position has been reached, the molten plastic material coming from the injection hot runner 1 is injected inside the cavity of the mold to form a first preform P. At the same time, the second core 7b, with the corresponding preform P arranged thereon, has been introduced in said lower cooling cavity 11b where the cooling of the preform P is completed to a desired level.

As shown in Figure 7, the baseplate 6 then starts a movement toward its open position while at the same time the neck-bearing plate 3 and the injection neck splits 9a, 9b carry out a synchronized combined opening movement symbolized by arrows Ma. In this movement start, the injection neck splits 9a, 9b aid in dragging the preform P together with the first core 7a, until being completely open to allow completely removing the first core 7a and demolding the preform P from the injection cavity 10. For its part, and at the same time, the second core 7b is simply removed from the lower cooling cavity 11b with the sufficiently cooled preform P thereon.

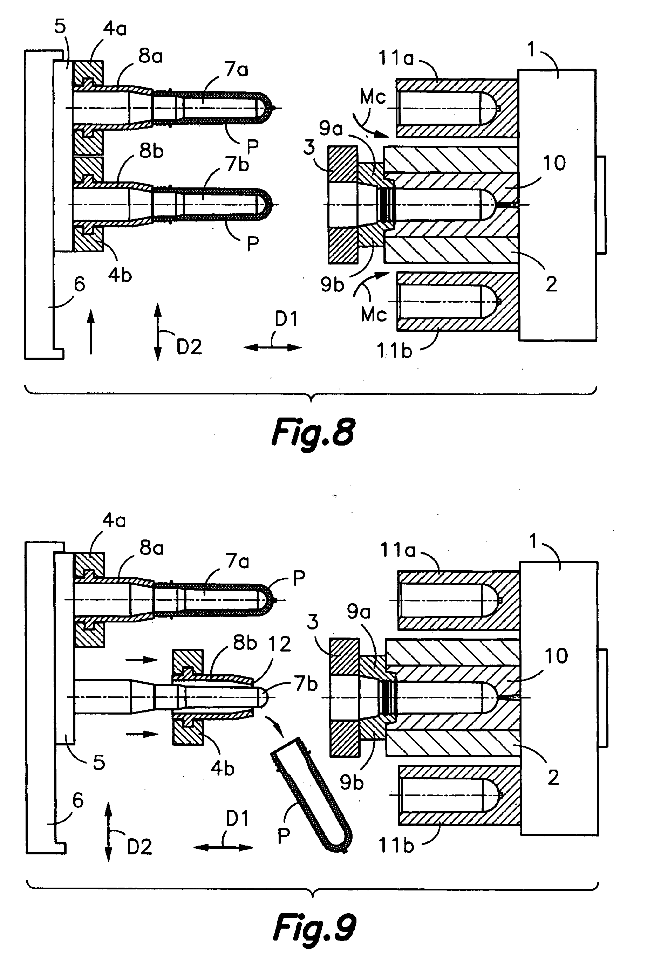

As shown in Figure 8, once the baseplate 6 is in the open position, the neck-bearing plate 3 and the injection neck splits 9a, 9b carry out a combined closing movement symbolized by arrows Mc, whereby the in jection neck splits 9a, 9b return to their initial closed position. Afterwards or simultaneously, the core-carrying plate 5 is moved by means of a hydraulic or motor-driven mechanism on the baseplate 6 towards the position shown in Figure 8, in which the first core 7a, having the recently injected and hot preform P, is opposite to the upper cooling cavity 11a while at the same time the second core 7b, having the cooled preform P, is opposite to the injection cavity 10.

As shown in Figure 9, the second ejecting element 8b is then moved by its respective ejecting plate 4b in a back and forth movement along the second core 7b to eject the cooled preform P, whereby the second core 7b is now bare and opposite to the injection cavity 10.

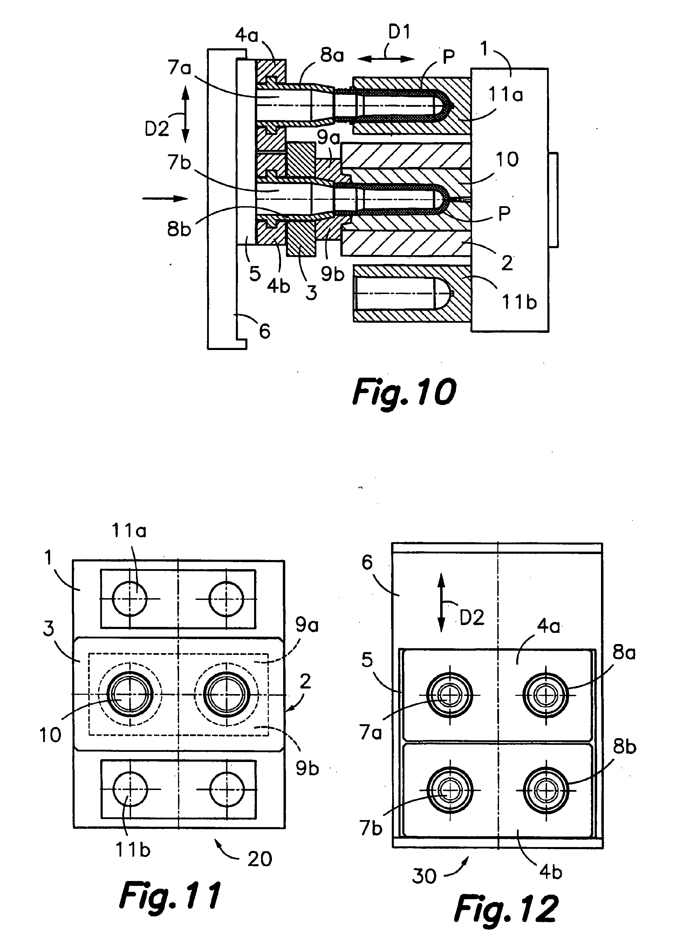

The baseplate 6 is finally again moved to the closed position, as shown in Figure 10, whereby the first core 7a, having the recently injected and hot preform P, is introduced in the upper cooling cavity superior 11a, and the second bare core 7b is inserted in an injection chamber 10 such that the mold cavity of the preform P is completed by the joint cooperation of several surfaces of the injection cavity 10, of the injection neck splits 9a, 9b, of the second core 7b and of the second ejecting element 8b. The hot preform P is thus cooled in the upper cooling cavity 11a while a new preform P is injected on the second core 7b in the injection cavity 10.

From this point, the previously described steps are alternately repeated. It must be indicated that the control device controls the movements of the ejecting plates 4a, 4b to only eject the preform P of that core 7a, 7b which has been removed from a cooling cavity 11a, 11b, but on the other hand does not act in the core 7a, 7b making the transition from the injection cavity 10 to one of the cooling cavities 11a, 11b.

Figures 11 and 12 show schematic plan views of the fixed part 20 and the moving part 30 of an apparatus according to a variant of this second embodiment. With reference to Figure 11, the cavity block 2 includes a row with a number of injection cavities 10 which is arranged between two rows with an identical number of cooling cavities 11 a, 11b each. Although the example shown in Figure 11 shows rows of two elements, said rows could obviously have any operating number of elements. Figure 12 shows the baseplate 6 on which the core-carrying plate 5 is assembled, which core plate has a number of cores 7a, 7b that is twice the number of cavities of injection cavities 10. The cores 7a, 7b are divided into two rows arranged at a distance equal to the distance between the injection cavities 10 and the cooling cavities 11 a, 11b. The operation cycle is carried out jointly for all the elements in a manner similar to that described above in relation to Figures 4 to 10 for a single injection cavity 10 arranged between two cooling cavities 11 a, 11b and two cores 7a, 7b, except that in this variant, each core 7a, 7b has its own ejecting element 8a, 8b associated thereto, and all the ejecting elements 8a associated to the cores 7a of one of the rows are joined to a first common ejecting plate 4a, and all the ejecting elements 8b associated to the cores 7b of the other row are joined to a second common ejecting plate 4b. The first and second ejecting plates 4a, 4b are independently actuated and controlled.

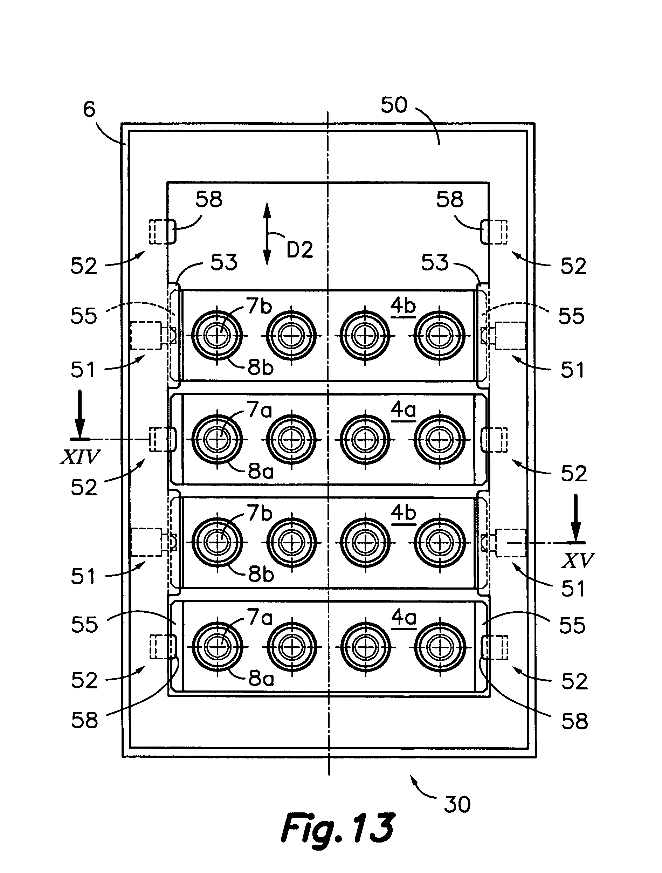

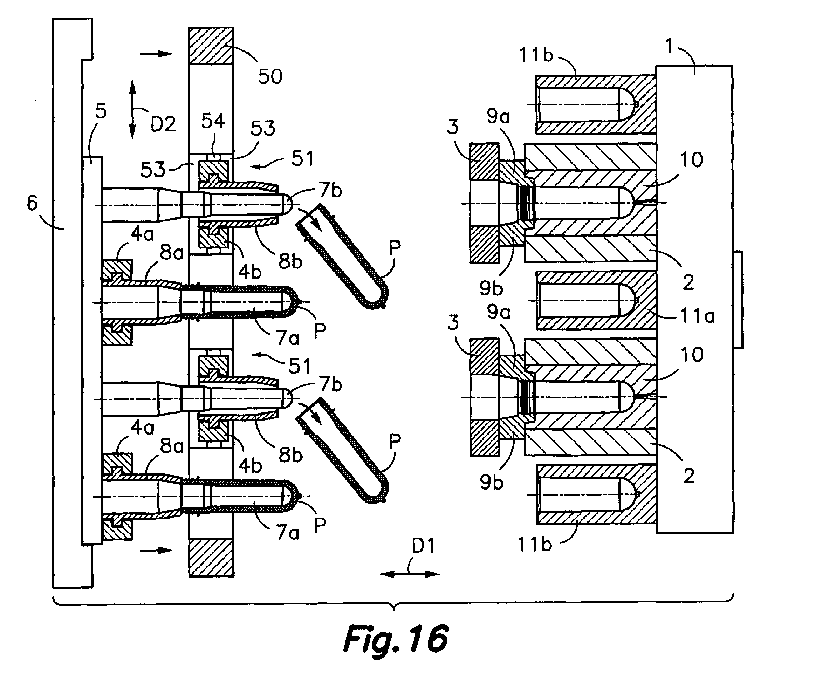

According to another variant of the second embodiment shown in Figures 13 to 16, the fixed part of the apparatus comprises a number of cavity blocks 2, each one including a row of injection cavities 10. The cavity blocks 2 are alternately placed among an identical number plus one of cooling blocks, each of which includes a row of cooling cavities 11a, 11b. Thus, a number n of rows of injection cavities 10 are alternately placed with a number n+1 of rows of cooling cavities 11a, 11b (Figure 16), the two end rows being rows of cooling cavities. Although Figure 16 shows the injection cavities 10 and the cooling cavities 11a, 11 b formed in separate blocks, in a preferred embodiment, both the injection cavities 10 and the cooling cavities 11a, 11b are formed in a same block and are arranged in respective alternately placed rows in the manner described in relation to Figure 16.

The moving part comprises the baseplate 6 on which the core-carrying plate 5 is assembled, which core plate has a number 2n of rows of cores 7a, 7b, i.e., a number of rows of cores 7a, 7b that is twice the number of rows of injection cavities 10. The core-carrying plate 5 is adapted and actuated to be moved on the baseplate 6 in a second direction D2 transverse to the first direction D1 to alternately oppose the rows of cores 7a, 7b to the rows of injection cavities 10 and to the rows of cooling cavities 1 1a, 11b. All the ejecting elements 8a, 8b associated to the cores 7a, 7b of each of the rows are joined to a common independently actuated and controlled ejecting plate 4a, 4b. In other words, there is an independent ejecting plate 4a, 4b for each row of cores 7a, 7b. The movements of the baseplate 6 in the first direction D1 are actuated in combination with the movements of the core-carrying plate 5 in the second direction D2 to alternately and cyclically introduce the rows of cores 7a, 7b in the rows of injection cavities 10 and in the rows of cooling cavities 11a, 11 b.

An actuation plate 50 is associated to the baseplate 6 and is actuated to be moved in the first direction D1 in relation thereto. In order to eject the preforms P, only the ejecting plates 4a, 4b associated to those cores 7a, 7b which have been removed from the cooling cavities 11a, 11b are selectively dragged by a movement of said actuation plate 50, whereas the ejecting plates 4a, 4b associated to those cores 7a, 7b which have been removed from the injection cavities 10 are retained next to the core-carrying plate 5.

To that end, as best shown in Figures 13, 14, 15A and 15B, the actuation plate 50 is provided with first selecting elements 51 cooperating with second selecting elements 52 assembled in the baseplate 6 to mechanically select which ejecting plates 4a, 4b will be dragged by the actuation plate 50 and which will be retained next to the core-carrying plate 5 according to the position of the ejecting plates 4a, 4b in relation to the baseplate 6 in the second direction D2. The first selecting elements 51 are adapted to be coupled to the ejecting plates 4a, 4b which must be dragged, thus linking them to the actuation plate 50, whereas the second selecting elements 52 are adapted to retain the ejecting plates 4a, 4b which must not be moved next to the core-carrying plate 5 when the core-carrying plate 5 is cyclically moved in direction D2 to alternately change the rows of cores 7a, 7b from their positions opposite to the rows of injection cavities 10 and to the rows of cooling cavities 11a, 11b. Thus, the movements of the core-carrying plate 5 in the second direction D2 alternately couple and uncouple the ejecting plates 4a, 4b with the first and second ejecting elements 51, 52.

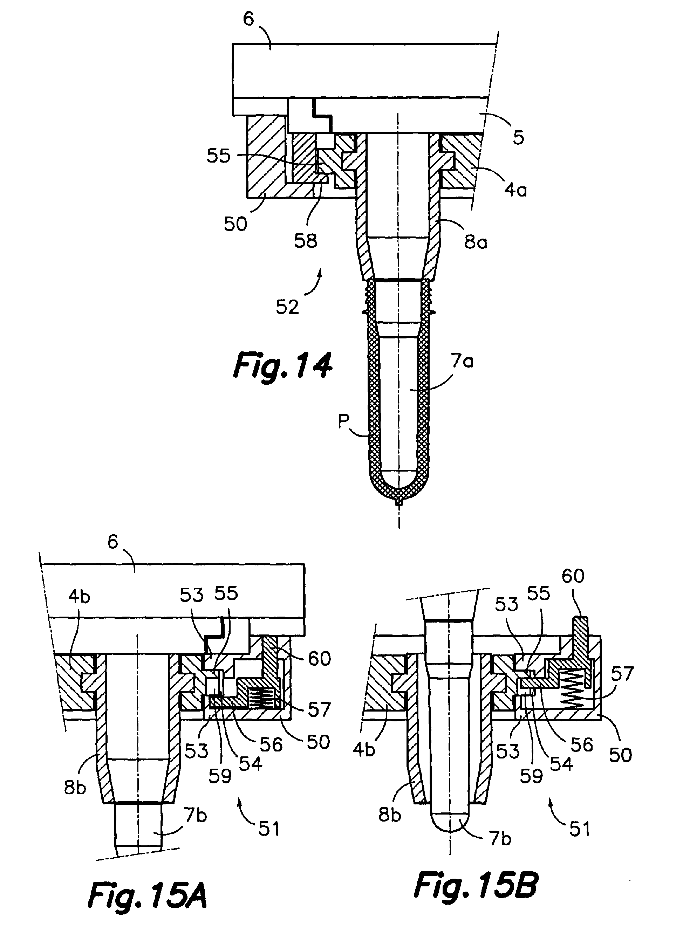

Figures 15A and 15B show the first selecting elements 51 in greater detail. The actuation plate 50 defines a frame inside which the ejecting plates 4a, 4b move in the second direction D2. The first selecting elements 51 comprise pairs of parallel flaps 53 formed in the actuation plate 50 and extending towards the inside of the mentioned frame from opposite edges thereof (see also Figure 13). A groove 54 is defined between each pair of flaps 53, which groove is adapted to receive a flange 55 formed in the corresponding edge of each ejecting plate 4a, 4b. When the ejecting plate 4a, 4b is moved in the second direction D2, the flange 55 is thus introduced in the groove 54, or it leaves such groove. When the flange 55 is in the groove 54 and the actuation plate 50 moves in the first direction D1, the flaps 53 can drag the ejecting plates 4a, 4b, leading the corresponding ejecting elements 8a, 8b to an ejection position (Figure 16). Each of the mentioned flanges 55 has a cavity 59 adapted to receive the insertion of a finger 56 that is elastically loaded by a spring 57 for example.

The mentioned finger 56 is assembled in a cavity of the actuation plate 50 such that it can be moved in relation to the actuation plate 50 in direction D1. The finger 56 is joined to an appendage 60 passed through an opening of the actuation plate 50 such that said appendage is pressed by the baseplate 6 when the actuation plate 50 is in its retracted position (Figure 15A). The finger 56 is thus pushed against the force of the spring 57 out of its coupling with the cavity 59 of the flange 55 and the ejecting plate 4a, 4b is free to move in direction D2. When the actuation plate 50 is separated from the baseplate (Figure 15B), the spring 57 pushes the finger 57 inside the cavity 59 and the appendage 60 projects from the actuation plate 50. The fingers 56 have the function of retaining the flanges 55 in the correct position in relation to the grooves 54 of the actuation plate 50, which is especially necessary when the baseplate 6 is installed in a vertical arrangement.

Figure 14 shows the second selecting elements 52 in greater detail, which selecting elements comprise retaining fingers 58 joined to the baseplate 6 and housed in holes of the actuation plate 50, such that said retaining fingers 58 project towards the inside of the frame defined by the actuation plate 50 so as to be placed above the flanges 55 of the ejecting plates 4a, 4b when the ejecting plates 4a, 4b are moved in the second direction D2. Thus, when the actuation plate 50 moves in the first direction D1 (Figure 16) only the ejecting plates 4a, 4b having their flanges 55 inserted in the grooves 54 between the flaps 53 of the first selecting elements 51 are moved, whereas the ejecting plates 4a, 4b having flanges 55 under the fingers 58 of the second selecting elements 52 are retained next to the core-carrying plate 5. The first and second selecting elements 51, 52 obviously admit multiple variants in relation to the embodiments shown.

The first selecting elements 51 are alternated with the second selecting elements 52, the selecting elements located at both ends of the baseplate 6 being second selecting elements 52. Figures 13 to 16 show some of the ejecting plates 4a retained by the second selecting elements 52 and other alternated ejecting plates 4b coupled to the first selecting elements 51. However, in a later phase of the cycle, the core-carrying plate 5 will be moved in the second direction D2, whereby the ejecting plates 4a previously retained by the second selecting elements 52 will be coupled to the first selecting elements 51 and the ejecting plates 4b previously coupled to the first selecting elements 51 will be retained by the second selecting elements 52, and so on.

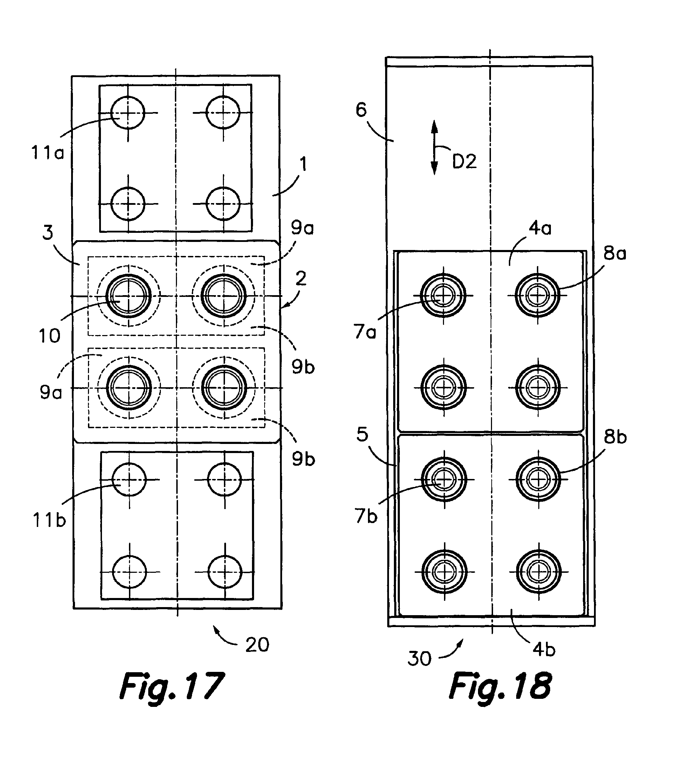

Figures 17 and 18 show schematic plan views of the fixed part 20 and the moving part 30 of an apparatus according to a third embodiment. The cavity block 2 shown in Figure 17 includes a group of injection cavities 10 arranged according to a matrix of, for example, a number o rows by a number of columns. This group of injection cavities 10 is arranged between two groups of cooling cavities 11a, 11b, each of which is formed by an identical number of rows and an identical number of columns as the group of injection cavities 10. Although the example shown in Figure 17 shows matrices of two rows by two columns of elements, said matrices could obviously have any operating number of rows and columns. Figure 18 shows the baseplate 6 on which the core-carrying plate 5 is assembled, which core plate has a number of cores 7a, 7b that is twice the number of cavities of injection cavities 10. The cores 7a, 7b are divided into two groups, each group having an identical number of rows and an identical number of columns as the group of injection cavities 10, both groups being separated by a distance equal to the distance between the groups of the injection cavities 10 and the groups of cooling cavities 11 a, 11b. The operation cycle is carried out jointly for all the elements in a manner similar to that described above in relation to Figures 4 to 10 for a single injection cavity 10 arranged between two cooling cavities 11a, 11b, and two cores 7a, 7b, except that in this embodiment, each core 7a, 7b has its own ejecting element 8a, 8b associated thereto, and all the ejecting elements 8a associated to the cores 7a of one of the groups are joined to a first common ejecting plate 4a, and all the ejecting elements 8b associated to the cores 7b of the other group are joined to a second common ejecting plate 4b. The first and second ejecting plates 4a, 4b are independently actuated and controlled.

According to a variant of this third embodiment (not shown), the fixed part of the apparatus comprises a number of groups of injection cavities alternated with groups of cooling cavities, the two end groups being groups of cooling cavities. The moving part comprises a number of groups of cores that is twice the number of groups of injection cavities. All the ejecting elements associated to the cores of each of the groups of cores are joined to a common independently actuated and controlled ejecting plate.

A person skilled in the art will be able to introduce variations and modifications in the embodiments shown and described without departing from the scope of the present invention as it is defined in the attached claims.

## Claims

1. An apparatus for injection molding of preforms, of the type comprising:
- a injection hot runner (1);
- a cavity block (2) containing at least one injection cavity (10) connected to said hot runner (1), said injection cavity (10) defining a first part of a mold of a preform (P);
- a neck-bearing plate (3) on which there are assembled injection neck splits (9a, 9b) adapted to close next to the opening of said injection cavity (10) to define a second part of said mold of said preform (P), and to open;
- a baseplate (6) having associated thereto at least one core (7) configured to define a third part of the mold of the preform (P), said baseplate (6) being actuated to move in a first direction (D1) between a closed position, in which said core (7) is introduced in said injection cavity (10), and an open position, in which the core (7) is removed from said injection cavity (10),
**characterized in that** it further comprises an ejecting element (8) associated to said core (7) and configured to define a fourth part of the mold of the preform (P), said ejecting element (8) being connected to an ejecting plate (4) actuated to move the ejecting element (8) in said first direction (D1) for the purpose of ejecting the preform (P) from the core (7).

2. An apparatus according to claim 1, **characterized in that** said ejecting plate (4) is actuated to move the ejecting element (8) along the core (7) in a back and forth movement carried out while the baseplate (6) is in said open position.

3. An apparatus according to claim 2, **characterized in that** the ejecting element (8) has the form of a sleeve arranged around the core (7).

4. An apparatus according to claim 3, **characterized in that** the ejecting element (8) in the form of a sleeve has an end annular surface (12) defining said fourth part of the mold of the preform (P).

5. An apparatus according to claim 4, **characterized in that** the preform (P) comprises a test tube-shaped body with a neck and a mouth, and **in that** the fourth part of the mold of the preform (P), defined by said end annular surface (12) of the ejecting element (8), substantially corresponds to an end annular part around said mouth of the preform (P).

6. An apparatus according to claim 5, **characterized in that** said first part of the mold of the preform (P), defined by the injection cavity (10), corresponds to an outer surface of said test tube-shaped body; said second part of the mold of the preform (P), defined by said injection neck splits (9a, 9b), corresponds to an outer surface of said neck; and said third part of the mold of the preform (P), defined by the core (7), corresponds to an inner surface of both the test tube-shaped body and the neck.

7. An apparatus according to claim 6, **characterized in that** the second part of the mold of the preform (P) includes a configuration to form a screw thread on said outer surface of the neck.

8. An apparatus according to any one of the previous claims, **characterized in that** said at least one injection cavity (10) is placed between two cooling cavities (11a, 11b), and **in that** it comprises two of said cores (7a, 7b) fixed to a core-carrying plate (5) adapted and actuated to be moved on the baseplate (6) in a second direction (D2) transverse to the first direction (D1), one of said ejecting elements (8a, 8b) being associated to each of the cores (7a, 7b) and connected to a respective independently actuated ejecting plate (4a, 4b), movements of the baseplate (6) and of said core-carrying plate (5) being controlled in combination to alternately introduce the cores (7a, 7b) in said injection cavity (10) and in one of said cooling cavities (11a, 11b), and movements of the ejecting plates (4a, 4b) being controlled to only eject the preform (P) from that core (7a, 7b) which has been removed from a cooling cavity (11a, 11b).

9. An apparatus according to any one of claims 1 to 7, **characterized in that** said cavity block (2) includes a number of said injection cavities (10) and is placed between two cooling blocks, each of which includes an identical number of cooling cavities (11a, 11b), and **in that** it comprises a double number of said cores (7a, 7b) fixed to a core-carrying plate (5) adapted and actuated to be moved on the baseplate (6) in a second direction (D2) transverse to the first direction (D1), one of said ejecting elements (8a, 8b) being associated to each of the cores (7a, 7b) and connected by groups with an identical number to two independently actuated ejecting plates (4a, 4b), movements of the baseplate (6) and of said core-carrying plate (5) being actuated in combination to alternately introduce the cores (7a, 7b) in said injection cavities (10) and in the cooling cavities (11a, 11b) of one of said cooling blocks, and movements of the ejecting plates (4a, 4b) being controlled to only eject the preform (P) from those cores (7a, 7b) which have been removed from the cooling cavities (11a, 11b).

10. An apparatus according to any one of claims 1 to 7, **characterized in that** it comprises a number n of rows of injection cavities (10) alternately placed among a number n+1 of rows of cooling cavities (11a, 11b), and **in that** it comprises a number 2n of rows of said cores (7a, 7b), the cores (7a, 7b) being fixed to a core-carrying plate (5) adapted and actuated to be moved on the baseplate (6) in a second direction (D2) transverse to the first direction (D1), a row of said ejecting elements (8a, 8b) being associated to each of the rows of cores (7a, 7b), said rows of ejecting elements (8a, 8b) being connected to respective independently actuated ejecting plates (4a, 4b), movements of the baseplate (6) and of said core-carrying plate (5) being actuated in combination to alternately introduce the rows of cores (7a, 7b) in the rows of injection cavities (10) and in the rows of cooling cavities (11a, 11b), an actuation plate (50) being arranged which is actuated to move in the first direction (D1), and first selecting elements (51) being joined to the actuation plate (50), which elements are adapted to mechanically select and be coupled with the ejecting plates (4a, 4b) associated to those cores (7a, 7b) which have been removed from the cooling cavities (11a, 11b) to eject the preforms (P), and second selecting elements (52) being assembled in the baseplate (6) to mechanically select and retain the ejecting plates (4a, 4b) associated to those cores (7a, 7b) which have been removed from the cooling cavities (11a, 11b) according to the position of the ejecting plates (4a, 4b) on the baseplate (6) in the second direction (D2).
